Europäisches Patentamt

European Patent Office

Office européen des brevets

(19)

(11) Numéro de publication : **0 587 469 A1**

(12) # DEMANDE DE BREVET EUROPEEN

(21) Numéro de dépôt : **93402031.4**

(22) Date de dépôt : **09.08.93**

(51) Int. Cl.⁵ : **G06F 15/70**

(30) Priorité : **11.08.92 FR 9209901**

(43) Date de publication de la demande :
**16.03.94 Bulletin 94/11**

(84) Etats contractants désignés :
**DE GB IT NL SE**

(71) Demandeur : **COMMISSARIAT A L'ENERGIE ATOMIQUE**
**31-33, rue de la Fédération**
**F-75015 Paris (FR)**

(71) Demandeur : **INTERTECHNIQUE**
**Boîte Postale 1**
**F-78374 Plaisir Cedex (FR)**

(72) Inventeur : **Letang, Jean-Michel**
**4, rue Augustin Blanc**
**F-38000 Grenoble (FR)**
Inventeur : **Rebuffel, Véronique**
**21, Grande Rue**
**F-38700 La Tronche (FR)**

(74) Mandataire : **Dubois-Chabert, Guy et al**
**c/o BREVATOME 25, rue de Ponthieu**
**F-75008 Paris (FR)**

(54) **Procédé de détection de mouvement, en imagerie monoculaire à système d'acquisition fixe.**

(57)     L'invention concerne un procédé de détection de mouvement en imagerie monoculaire à système d'acquisition fixe, dans des séquences d'images, ledit procédé comprenant les étapes suivantes :

— une étape d'acquisition (20) d'une séquence d'au moins deux images par le système d'acquisition sous forme d'un signal (SNN) analogique,

— une étape (21) de numérisation et mémorisation à la cadence d'échantillonnage du système d'acquisition de tout ou partie de la séquence dans l'ordre d'acquisition,

— une étape (22) d'au moins deux transformations temporelles successives de la séquence d'images numérisées par application successive à ladite séquence d'images numérisées de fonctions temporelles d'au moins deux différents degrés de resolution, issues d'une famille de fonctions temporelles,

— une étape (23) de combinaison de l'ensemble des transformations temporelles issues de toutes les fonctions contenues dans la famille de fonctions,

— une étape (24) de visualisation.

Application notamment au domaine de la surveillance de scènes.

FIG. 2

## Domaine technique

L'invention concerne un procédé de détection de mouvement, en imagerie monoculaire à système d'acquisition fixe.

## Etat de la technique antérieure

L'imagerie monoculaire à système d'acquision fixe est souvent employée en surveillance de scène. Les traitements de détection de mouvement ont surtout été étudiés pour des univers proches, où les objets à détecter ont une taille non négligeable (circulation routière, ...), et où l'illumination reste constante. La plupart des études s'intéresse d'abord à la qualité spatiale de la réponse : obtenir un masque qui soit le plus fidèle possible à l'objet en mouvement.

Contrairement aux approches qui sont basées sur une information de profondeur comme en stéréovision, en télémétrie laser, ou en écho radar, l'imagerie monoculaire repose sur une seule caméra qui fournit à la cadence vidéo une succession d'images, ou séquence d'images, représentant une projection plane de l'environnement. Dans ce cas, la détection de mouvement revient à un problème de "découpage" (ou segmentation) de la scène en deux parties où les classes mobiles sont déterminées dans la séquence d'images à partir des variations dans le temps de la distribution d'intensité.

Des méthodes mettant en oeuvre plusieurs images successives (deux, trois ou même un nombre entier n ), sont décrites dans différents articles de l'art connu, et notamment :

- Dans un article de Y.Z. HSU, H.H. NAGEL et G. REKERS, intitulé "New Likelihood Test Methods For Change Detection In Image Sequences" (Computer Vision, Graphics and Image Processing, 26:73-106, 1984) qui décrit des procédés de tests statistiques pour confronter deux hypothèses : il y a un changement entre deux images successives dans le voisinage d'un pixel, ou il n'y en a pas. Ces procédés suggèrent de modéliser par des statistiques la fonction locale d'intensité pour établir un test de vraisemblance (rapport de variances). La détection de changement consiste donc à valider ou à rejeter un changement dans les paramètres du modèle. Ils font l'hypothèse d'une illumination constante. Ces tests sont relativement précis lorsque les variations temporelles dues au déplacement de l'objet sont importantes (mouvement rapide, objets très contrastés). Par contre, du fait de leur dimension temporelle limitée (deux images successives), leur robustesse au bruit et leur sensibilité aux mouvements lents sont très pauvres.
- Pour améliorer la robustesse au bruit, un article de K. SKIFSTAD et R. JAIN intitulé "Illumination Independent Change Detection For Real World Image Sequences" ("Computer Vision, Graphics and Image Processing", 46:387-399, 1989) décrit deux techniques pour s'affranchir de l'hypothèse restrictive d'illumination constante :
    - . la première technique repose sur une approximation quadratique de la surface intensité. La divergence du modèle rend alors le test moins sensible aux variations d'illumination. Mais les zones uniformes, ou peu contrastées, sont fortement pénalisées par ces modélisations,
    - . la deuxième technique repose sur un modèle de réflectivité locale des matériaux. Ce dispositif est pratiquement inutilisable car il est dépendant d'une transformation linéaire de la séquence : si on numérise avec des valeurs de 0 à 255, le test ne donnera pas le même résultat si la fenêtre de numérisation est déplacée ou changée de taille. Le passage en négatif, ou toute autre modification linéaire de la séquence, bouleverse le résultat.

De plus, ces tests ne mettent en jeu que deux images successives pour déterminer s'il a mouvement ou non; ils sont incapables de répondre à des mouvements non rapides.

- Un article de S.P. LIOU et R.C. JAIN intitulé "Motion Detection In Spatio-Temporal Space" ("Computer Vision, Graphics and Image Processing", 45:227-250, 1989) décrit l'élaboration de tests de détection de changements basés sur des heuristiques (tests ne reposant pas sur une modélisation statistique) en calculant les gradients spatio-temporels de la séquence. Pour avoir de bons résultats lorsque l'amplitude du mouvement est de plus en plus faible, il est nécessaire d'élargir considérablement la dimension des voisinages pour le calcul des gradients (typiquement au moins huit images). Ainsi la quantité d'information devient vite prohibitive, conduisant à un dispositif très coûteux en temps. De plus, puisque la méthode est monoéchelle, une valeur a priori de la largeur du voisinage temporel doit être fixée pour s'adapter à la vitesse.

Dans les premiers tests qui viennent d'être décrits, le mouvement est déduit de deux images consécutives, c'est-à-dire des changements entre une image et l'image suivante. Certains tests consistent à construire une image de référence, représentant les parties fixes de l'environnement. La détection de changements temporels est alors appliquée au couple "image de référence / image courante". Dans ce cas, on peut parler de détection de mouvement, car les masques obtenus des objets en mouvement sont complets.

Il y a plusieurs procédés pour mettre à jour l'image de référence, tels que ceux décrits dans :

- un article de G.W. DONOHOE, D.R. HUSH, et N. AHMED, intitulé "Change Detection For Target Detection and Classification In Video Sequences" ("International Conference on Accoustic Speech and Signal Processing", New York, pages 1084-1087, 1988), qui utilise une simple équation récursive,
- un article de K.P. KARMANN et A. VON BRANDT, intitulé "Moving Object Recognition Using An Adaptative Background Memory" (V. Cappellini, Editeur, "Workshop On Time-Varying Image Processing and Moving Object Recognition", 2, pages 289-296, 1990) qui utilise le filtrage de Kalman.

Les résultats obtenus dans ces deux procédés sont acceptables, à condition d'avoir à tout instant une référence parfaite. Malheureusement leur mise à jour est très difficile et le dispositif ne marche plus lorsque la caméra est animée d'une légère oscillation ou lorsque l'illumination varie au cours de la séquence.

Ces différents procédés de détection de mouvement de l'art connu ne s'appliquent donc qu'à des environnements bien spécifiques.

Un article intitulé "Analyse de mouvements par la décomposition en ondelettes de séquences d'image" de V. DEVLAMINCK, P. NIKYAMA et J.P. DABUS (colloque sur le traitement du signal et des images, 16 septembre 1991, Paris, pages 977-979) traite du principe de la décomposition d'un signal tridimensionnel par la méthode des ondelettes et de son application à l'étude du mouvement dans les séquences d'images. Le procédé décrit consiste à appliquer à la séquence d'image un filtre temporel à un degré de résolution puis plusieurs filtres spatiaux de degrés de résolution croissants. On considère ici une dimension temporelle et deux dimensions spatiales.

Une demande de brevet européen EP-A-0 410 826 décrit un procédé itératif d'estimation de mouvement, entre une image de référence et une image courante. Ce procédé consiste, en réalisant un nombre fixé d'itérations, à estimer le mouvement global de l'image courante en calculant les valeurs des paramètres d'un modèle spatial de mouvement. Ce procédé ne considère que les variations spatiales observées d'une image à l'autre.

Exposé de l'invention

L'objet de l'invention est de proposer un procédé de détection qui s'attache en priorité à obtenir une bonne robustesse au bruit de manière à obtenir un système moins sensible aux aléas de l'environnement des capteurs, pour détecter des mouvements de très faible amplitude.

L'invention propose, à cet effet, un procédé de détection de mouvement en imagerie monoculaire à système d'acquisition fixe, dans des séquences d'images, ledit procédé comprenant les étapes suivantes :

- une étape d'acquisition d'une séquence d'au moins deux images par le système d'acquisition sous forme d'un signal,
- une étape de numérisation et mémorisation à la cadence d'échantillonnage du système d'acquisition de tout ou partie de la séquence d'images dans l'ordre d'acquisition,
- une étape de visualisation, caractérisé en ce qu'il comprend avant l'étape de visualisation :
- une étape d'au moins deux transformations temporelles successives de la séquence d'images numérisées par application successive à ladite séquence d'images numérisées de fonctions temporelles d'au moins deux différents degrés de résolution issues d'une famille de fonctions temporelles,
- une étape de combinaison de l'ensemble des transformations temporelles issues de toutes les fonctions contenues dans la famille de fonctions.

Dans le procédé de l'invention, n'est considérée que la dimension temporelle. C'est-à-dire que l'analyse du mouvement se fait par application à la séquence d'images de filtres temporels successifs ayant différents degrés de résolution (décomposition temporelle multirésolution ou multi-échelle).

De plus dans l'invention les pixels des images sont considérés comme indépendants deux-à-deux et d'intensité variable au cours du temps : le procédé de l'invention consiste en une décomposition multirésolution appliquée sur les signaux temporels de la séquence d'image.

Avantageusement, le procédé de l'invention comporte également une étape de binarisation de transformations successives subies par la séquence d'images numérisées et mémorisées, cette étape ayant lieu après l'étape de transformations successives de la séquence numérisée.

Avantageusement, l'étape de transformations successives de la séquence d'images numérisées est une étape de transformations par ondelettes avec la base de HAAR.

Avantageusement, un tel procédé fonctionne avec

- des objets de petite taille, peu Lumineux, dont le mouvement apparent peut être très faible ; leur signature n'est pas obligatoirement fixe tout au long de la séquence (variation d'illumination, ou partiellement cachée),
- une scène dénudée : c'est-à-dire en l'absence de structures bien contrastées dans l'environnement (comme en intérieur, ou en vision proche) qui facilitent le repérage ou la détection de changements,

- des aléas : petites variations d'illuminations, petites variations des conditions atmosphériques ; superposition de mouvements parasites, comme la fumée, le vent dans les feuilles, ...,
- une caméra quasi immobile, dans le sens où de petites oscillations sont tolérables ; imageries indifféremment infrarouges ou visibles ; des capteurs linéaires ou matriciels.

Le procédé de l'invention fonctionne bien évidemment aussi dans des cas plus classiques, comme ceux décrits dans les articles de l'art connu, cités plus haut.

Avantageusement, le procédé de l'invention permet la détection simultanée de plusieurs mouvements dans une même séquence d'images.

Grâce à l'approche multi-résolution temporelle de l'invention, on peut appréhender et caractériser n'importe quel type de mouvement, même très lent, pas du tout visible dans les approches de l'art connu. On peut désormais parler de robustesse dans la détection de mouvement, le procédé de l'invention ne demande en effet pas une imagerie de bonne qualité, ou des objets fort contrastés. Le système d'acquisition est supposé fixe comme en surveillance de scènes, mais les perturbations dues à de petits mouvements parasites, qui posent de graves problèmes aux méthodes classiques, ne sont plus gênantes.

Dans le cas de procédé multirésolution concernant les données spatiales, les différents niveaux de décomposition correspondent à des images dont les dimensions décroissent d'un niveau au suivant. L'information est ainsi condensée par voisinage de pixels. Par exemple, d'une image 256 x 256 pixels on peut obtenir au degré de résolution 2 une image de 64 x 64 pixels. Chacune des images obtenues à ces différents degrés de résolution correspond à une vue à une échelle spatiale différente qui sera interprétée en fonction de la transformée appliquée à la décomposition. Appliqué à la détection de mouvement, ce type de procédé est particulièrement efficace dans le cas de mouvements rapides d'objets de grandes dimensions.

Dans le cas de procédé multirésolution concernant les données temporelles, la décomposition est appliquée au signal constitué de l'évolution de chaque pixel des images issues de la séquence, au cours du temps. Les données issues de la décomposition sont constituées d'un ensemble d'images de même dimension que celle de la séquence initiale. Les différents niveaux de décomposition (représentés par un ensemble d'images) traduisent le comportement dynamique à différentes échelles temporelles. Ce type de procédé permet la détection de petits objets se déplaçant lentement, dont la trace serait perdue avec des procédés multirésolution sur les données spatiales.

On trouve dans l'art antérieur des procédés considérant d'une part les données temporelles et d'autre part les données spatiales. Or les procédés "temporels" présentés ne considèrent en fait qu'un seul deyré de résolution. En effet, les seuls traitements appliqués aux données temporelles sont des moyennages entre deux images consécutives ou des différences de deux images. Les traitements multirésolution ne sont appliqués qu'aux données spatiales.

Dans l'invention, au contraire, ce sont les données temporelles qui subissent un traitement suivant différents degrés de résolution. L'idée d'utiliser les données temporelles d'une façon plus approfondie nécessite de surmonter un a priori : en effet, l'homme de l'art est amené à résoudre le problème de détection de mouvement en utilisant une méthode de résolution tenant compte principalement des données spatiales. Même s'il pensait à utiliser des transformations sur des données temporelles, il ne serait pas évident pour lui de savoir quelle transformée temporelle utiliser. En effet, celles-ci sont nombreuses (Fourier, Gabor, ondelettes...). En particulier l'utilisation des transformées de Fourier est immédiate pour l'homme de l'art, contrairement à l'utilisation des ondelettes. Or le problème résolu par l'invention ne l'est pas en utilisant les transformées de Fourier. De plus, il existe plusieurs familles d'ondelettes. Là aussi, rien ne laisse présager que la base de Haar soit le meilleur compromis pour détecter les mouvements petits et lents de façon robuste. La base de Haar fait partie des familles les plus simples et a été préférée parmi d'autres (à condition d'être appliquée avec au moins deux degrés de résolution) après de muliples essais. Enfin, pour exploiter les résultats obtenus après filtrage par cette base, lorsque le degré de résolution est supérieur à deux, une étape supplémentaire de combinaison de ces résultats (comprenant dans un mode avantageux de l'invention, une binarisation des transformations successives subie par la séquence d'images) est nécessaire. La combinaison est élaborée suivant la transformée choisie et est spécifique au problème résolu par l'invention, problème jamais traité auparavant.

## Brève description des dessins

- La figure 1 illustre un dispositif permettant la mise en oeuvre du procédé de l'invention,

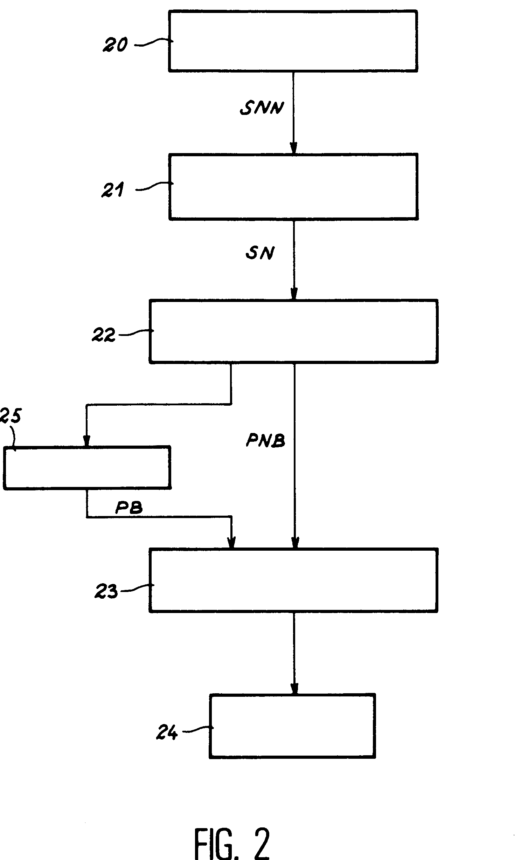

- la figure 2 est un organigramme illustrant le procédé de l'invention,
- la figure 3 illustre un exemple de décomposition fréquencielle, utilisée dans le procédé de l'invention.

## Exposé détaillé de modes de réalisation

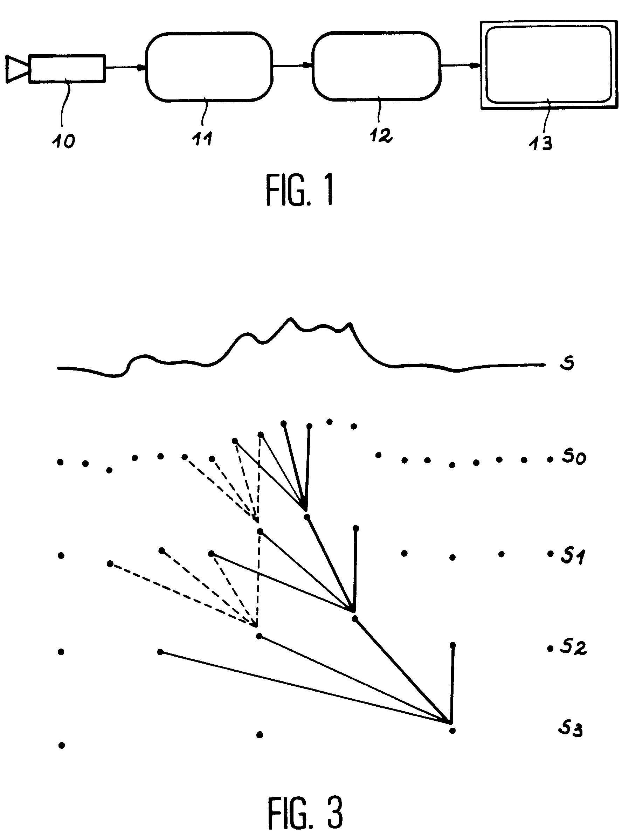

Le dispositif permettant la mise en oeuvre du procédé de l'invention est représenté à la figure 1. Il comprend quatre étages :

- le premier étage 10 est un système d'acquisition de séquence d'images, par exemple une caméra. Le système utilisé peut être indifféremment une CCD, une caméra vidéo, une caméra infrarouge, ou tout autre capteur d'imagerie,
- le deuxième étage 11 sert en fait d'intermédiaire entre le système d'acquisition et un module de détection 12 : le signal vidéo est numérisé et stocké en mémoire,
- le troisième étage 12 est un organe de traitement, ou tout autre processeur programmable, où est implémenté le module de détection du mouvement. Il reçoit en entrée une séquence d'images numérisées,
- le dernier étage 13 est un étage de visualisation des cartes de détection provenant de la détection de mouvement ; par exemple un tube cathodique, un écran de cristaux liquides, ou toute forme de visualisation d'images.

Les procédés de l'art connu privilégient l'analyse des dimensions spatiales à l'axe temporel : ainsi, des informations symboliques, ou primitives, sont extraites des images tout au long de la séquence, et leur confrontation permet d'en déduire l'information de mouvement. Au contraire, le procédé de l'invention considère (dans un premier temps) que la séquence d'images est un ensemble d'éléments d'images, ou pixels, indépendants deux à deux dont l'intensité peut varier au cours du temps : c'est une vision monodimensionnelle temporelle de la séquence.

Le procédé de l'invention est basé sur une décomposition multi-résolution, appliquée sur les signaux temporels de la séquence d'images en détection de mouvement.

Dans la suite, pour la description du procédé de l'invention, on va considérer un exemple de procédé particulièrement adapté à une exploitation en temps réel. Les étapes distinguées ci-dessous peuvent, bien entendu, être adaptées selon les besoins et le contexte opérationnel (temps de réponse, mouvements, environnement...).

Un tel procédé comprend les différentes étapes suivantes :

- une première étape 20 d'acquisition de la séquence d'images par le système d'acquisition 10, qui permet d'obtenir un signal non numérique SNN,
- une seconde étape 21 de numérisation et mémorisation de la séquence d'images qui permet d'obtenir un signal numérique SN,
- une troisième étape 22 de transformation multi-résolution de la séquence d'images qui permet d'obtenir une pyramide PNB, non binaire, de décomposition,
- une quatrième étape 23 de combinaison de l'ensemble de la décomposition multi-résolution,

- une cinquième étape 24 de visualisation de la décision finale.

On va, à présent, analyser chacune de ces étapes :

- Pendant la première étape 20, il faut tout d'abord acquérir une séquence d'au moins deux images. Selon le contexte et le type d'application souhaités, on peut choisir un système d'acquisition adapté (caméra infrarouge, CCD,...).
- Pendant la seconde étape 21, il faut, au fur et à mesure, à la cadence du système d'acquisition, numériser et stocker en mémoire le signal SNN, c'est-à-dire des images provenant du système d'acquisition, en général non numérisées ; ce qui est indispensable pour la suite du procédé.

En ce qui concerne la cadence d'acquisition du système 10, on choisit de préférence une cadence adaptée à l'ordre de grandeur du mouvement que l'on veut étudier : par exemple, pour détecter un mouvement visible à l'oeil, la cadence d'acquisition sera de l'ordre de vingt cinq images par seconde. Pour détecter le mouvement de la lune, une cadence cent fois plus lente suffira. Pour détecter des mouvements lents, on augmente le nombre de niveaux d'analyse ou/et on diminue la cadence de prise d'images.

- Pendant la troisième étape 22, on réalise une transformation multi-résolution de la séquence d'images SN. Cette transformation est une projection de la séquence d'images sur une base.

Pour traiter la séquence d'images SN, le choix de la transformation est important. Ainsi la transformée de Fourier sur une fenêtre n'est pas orthogonale (décomposition exacte sans recoupement des différents morceaux) et la largeur de la fenêtre de pondération est fixe; elle est donc moins intéressante ici. Dans un mode avantageux, le procédé de l'invention utilise des transformations par ondelettes, qui sont beaucoup mieux adaptées.

Les transformations par ondelettes sont des transformations successives d'une séquence d'images numérisées par application à ladite séquence numérisée de fonctions temporelles, issues d'une famille de fonctions temporelles, dans un ordre croissant du degré de résolution de ces fonctions à ladite séquence numérisée. Ces transformations forment une famille où les bases sont créées par dilatation et déplacement d'une fonction unique. Parmi le large éventail de familles existantes, les familles de fonctions conçues par I. DAUBECHIES, telles que décrites dans un article de celle-ci intitulé "The Wavelet Transform, Time-frequency Localization and Signal Analysis" ("IEEE Transaction on Information Theory", 36(5):901-1005, 1990) offrent un bon compromis entre une décomposition orthogonale, un support borné (portion du domaine d'étude de la fonction qui est intéressante), et une régularité croissante avec la taille du support. Pour l'application temps-réel, qui sert ici d'illustration, il est primordial de mettre en jeu le plus petit nombre de coefficients pour synthétiser la base : on utilise donc la base de HAAR (support de taille deux). Cela revient à faire de manière hiérarchique des moyennes et des différences de moyennes d'images. Une base plus régulière de cette famille n'améliore que légèrement la décomposition, au dépend d'un temps de réponse plus élevé et d'une plus grande mémoire nécessaire. Le traitement est massivement parallélisable : en effet, dans l'analyse par ondelettes, les pixels de l'image sont indépendants ; ils peuvent donc être décomposés en même temps, c'est-à-dire en parallèle. Cette analyse multi-résolution (la transformation revient à "regarder" le signal avec différents facteurs de grossissement) n'est pas limitée en profondeur : il n'y a pas de limite au facteur de grossissement ; on peut toujours prendre un facteur supérieur (par exemple double).

Si l'on prend un nombre de niveaux important, des mouvements très lents commencent à apparaître : nuages, dérive de la caméra. A moins de s'intéresser à ce type de mouvement, ou à des objets de très faible vitesse, il n'est pas essentiel de descendre très profond en niveaux (plus coûteux en temps de calcul). De même, si les mouvements que l'on souhaite récupérer sont de l'ordre du demi-pixel par image, il n'est pas nécessaire de décomposer sur beaucoup de niveaux : le compromis optimal dans le cas où l'ordre de grandeur du mouvement n'est pas connu est de cinq niveaux.

- Pendant la quatrième étape, on réalise une combinaison de l'ensemble de la décomposition multi-résolution. Pour obtenir la décision finale de segmentation, on combine les différents niveaux issus de la décomposition. A partir de la pyramide de la décomposition PD, on construit alors une seule carte cumulative avec trois étiquettes différentes "immobile", "bruit", "mouvement", définies ci-dessous :

  . "immobile" : les pixels n'ont pas de composante significative à un niveau donné,
  . "bruit" : les pixels ont une composante significative à un niveau "k" donné et au moins sur deux niveau consécutifs "k", "k+1",
  . "mouvement" : les pixels ont une composante significative à un niveau "k" donné et au moins sur trois niveaux consécutifs "k", "k+1" et "k+2". Ce critère de "mouvement" (trois niveaux consécutifs parmi les cinq de la pyramide) a l'avantage d'être à la fois robuste au bruit et rapide ; de plus, il n'a pas besoin d'être ajusté en fonction de la vitesse d'intérêt.

- Pendant la cinquième étape a lieu une visualisation de la décision finale : le résultat de la combinaison de l'ensemble des niveaux est affiché sur un écran, ou imprimé, ou encore visualisé sur un système de représentation d'images selon le contexte opérationnel, à la cadence du système d'acquisition ou à une cadence multiple.

Avantageusement dans le système de l'invention, pour simplifier l'exploitation de la décomposition multi-résolution, il est judicieux, à la fin de la troisième étape, de restreindre la décomposition à un espace binaire (un bit par pixel) au lieu de l'espace réel (soixante quatre bits par pixel) grâce à une étape 25 de binarisation qui permet d' obtenir une pyramide binaire PB. On peut par exemple effectuer une binarisation par un test de vraisemblance, comme décrit dans la thèse de P. LALANDE intitulé : "Détection de mouvement dans une séquence d'images selon une approche markovienne" (Thèse PhD, Université de Rennes, Mars 1990), sur un voisinage de neuf pixels autour du pixel d'intérêt. C'est un test qui repose sur une modélisation linéaire locale de surface, avec un modèle à variance constante, calculée empiriquement par la moyenne des écarts au modèle linéaire à chaque image. Ce test fait partie des tests de détection de changement. Une étude de P. LALANDE a montré que cette binarisation était optimale pour un bon rapport robustesse /temps de calcul.

En chaque instant, on a accès à une pyramide de cartes binaires, caractérisant la présence ou l'absence de composantes multi-résolutions significatives à un niveau donné, soit une étiquette **"changement"**, soit une étiquette **"statique"**.

La binarisation permet de réduire considérablement la taille mémoire nécessaire, et conduit à des algorithmes d' exploitation de la décomposition multi-résolution très rapides. Elle est appropriée dans l'exemple du procédé choisi ici.

L'exploitation de la décomposition multi-résolution de la quatrième étape peut être modifiée selon le contexte de fonctionnement du dispositif de détection de mouvement. Cette étape peut notamment être modifiée et donner lieu à une modélisation plus complexe, directement sur la pyramide de décomposition réelle (non-binarisée), si les exigences en terme de performance sont supérieures au temps de réponse et en matériel (compacité, prix,...).

Pour donner un exemple de réalisation, en prenant :

- la transformation par ondelettes avec la base de HAAR dans la décomposition multi-résolution,
- K niveaux de décomposition,
- une cadence d'échantillonnage F,

le temps de réponse incompressible (c'est-à-dire, le retard à la décision) est de :

$$\frac{2^{K-1}}{F} \text{ secondes (F image/seconde)}$$

(on considère un temps de traitement nul).

Ainsi, si :

K = 5 niveaux

F = 25 images/seconde

le retard est de 0,64 secondes, c'est-à-dire correspondant à l'acquisition de 16 images et il a fallu 32 images pour donner la décision au niveau 5.

Sur la figure 3, on donne un exemple de décomposition fréquencielle, en prenant une transformation multi-résolution, en utilisant la base de HAAR. I. DAUBECHIES dans un article intitulé "Orthogonal Bases Of Wavelets With Finite Support - Connection With Discrete Filters" ("Wavelets, Time-Frequency Methods And Phase Space", Proceedings of the International Conference, Marseille. 14-18 Décembre 1987) étudie ce sujet de façon détaillée.

On réalise l'analyse multi-résolution de $N^2$ signaux monodimensionnels temporels, correspondant à une séquence de NXN images, avec une base de taille 4, c'est-à-dire un support à quatre coefficients.

Sur cette figure sont représentés :
- le signal temporel S,
- le signal échantillonné So,
- la première approximée (obtenue par décomposition par ondelettes) S1,
- la seconde approximée S2,
- la troisième approximée S3.

La base de HAAR, représentée en trait gras, est une base de taille 2 :

H (1/ √2, 1/ √2), G (-1/ √2, 1 / √2).

On obtient :
- les approximées de niveau K+1 : $C_{K+1}=H.C_k$,
- les différences en information de niveau K+1 : $D_{k+1}=G.C_k$.

Ainsi, pour obtenir le niveau 4 de la décomposition, il faut 16 images avec une base 2.

Le procédé de l'invention, tel que décrit précédemment, concerne le domaine de la surveillance en général. De nombreuses applications industrielles sont possibles, notamment :
- la surveillance d'aéroport par imagerie infrarouge pour lutter contre les difficultés de circulation par temps de brouillard,
- la surveillance de zone portuaire pour l'aide au trafic maritime,
- la surveillance de l'espace aérien,
- la surveillance de passages à niveau pour alerter de la présence d'un intrus sur la voie,
- la surveillance de site extérieur, comme une zone industrielle.

## Revendications

1. Procédé de détection de mouvement en imagerie monoculaire à système d'acquisition fixe dans des séquences d'images, ledit procédé comprenant les étapes suivantes :
   - une étape d'acquisition (20) d'une séquence d'au moins deux images par le système d'acquisition (10) sous forme d'un signal (SNN),
   - une étape (21) de numérisation et de mémorisation à la cadence d'échantillonnage du système d'acquisition (10) de tout ou partie de la séquence d'images dans l'ordre d'acquisition,
   - une étape (24) de visualisation,
   caractérisé en ce qu'il comprend, avant l'étape (24) de visualisation :
   - une étape (22) d'au moins deux transformations temporelles successives de la séquence d'images numérisées par application successive à ladite séquence d'images numérisées de fonctions temporelles d'au moins deux différents degrés de résolution, issues d'une famille de fonctions temporelles,
   - une étape (23) de combinaison de l'ensemble des transformations temporelles issues de toutes les fonctions contenues dans la famille de fonctions.

2. Procédé selon la revendication 1, caractérisé en ce qu'il comporte une étape (25) de binarisation des transformations successives subies par la séquence d'images numérisées et mémorisées, cette étape ayant lieu après l'étape (22) de transformations successives de la séquence numérisée.

3. Procédé selon la revendication 1, caractérisé en ce que l'étape (22) de transformations successives de la séquence d'images mémorisées est une étape de transformations par ondelettes.

4. Procédé selon la revendication 3, caractérisé en ce qu'on utilise ces transformations par ondelettes avec la base de HAAR.

FIG. 1

FIG. 3

FIG. 2

**Office européen**
**des brevets**

**RAPPORT DE RECHERCHE EUROPEENNE**

Numero de la demande
**EP 93 40 2031**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | COLLOQUE SUR LE TRAITEMENT DU SIGNAL ET DES IMAGES 16 Septembre 1991 , PARIS pages 977 - 979 XP242941 DEVLAMINCK E.A. 'ANALYSE DE MOUVEMENTS PAR LA DECOMPOSITION EN ONDELETTES DE SEQUENCES D'IMAGE' * le document en entier * | 1-4 | G06F15/70 |
| X | EP-A-0 410 826 (THOMSON-CSF) * le document en entier * | 1 | |
| | | | DOMAINES TECHNIQUES RECHERCHES (Int.Cl.5) |
| | | | G06F |

Le présent rapport a été établi pour toutes les revendications

| Lieu de la recherche | Date d'achèvement de la recherche | Examinateur |
|---|---|---|
| LA HAYE | 17 Novembre 1993 | BURGAUD, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)